# EUROPÄISCHE PATENTSCHRIFT

(11) **EP 1 007 290 B1**
(45) Veröffentlichungstag und Bekanntmachung des Hinweises auf die Patenterteilung: **30.01.2002**
(21) Anmeldenummer: 98946303.9
(22) Anmeldetag: 07.08.1998
(51) Int. Cl.: B25H 3/00

(54) **WERKZEUGKOFFER MIT MINDESTENS EINER KABELROLLE**
TOOLBOX CONTAINING AT LEAST ONE CABLE REEL
COFFRE A OUTILS COMPRENANT AU MOINS UN ROULEAU DE CABLE

(30) Priorität: 27.08.1997 DE 19737424
(43) Veröffentlichungstag der Anmeldung: 14.06.2000
(73) Patentinhaber: Müller, Lothar, 82049 Pullach (DE)
(72) Erfinder: Müller, Lothar, 82049 Pullach (DE)
(74) Vertreter: Hiltl, Elmar, Dr.
(86) Internationale Anmeldenummer: EP9805031
(87) Internationale Veröffentlichungsnummer: WO9910134

(56) Entgegenhaltungen:
- DE-U- 8 227 725
- GB-A- 2 226 009
- US-A- 5 339 956

## Beschreibung

Die Erfindung betrifft einen Werkzeugkoffer nach dem Oberbegriff des Patentanspruchs 1, der sowohl von Hobbyhandwerkern als auch von gewerblichen Handwerkern verwendet werden kann.

Ein Werkzeugkoffer der genannten Art ist durch das DE-U-8227725 bekannt geworden.

Im privaten und gewerblichen Bereich ist es seit langem bekannt, spezielle Werkzeuge und Geräte elektrisch zu betreiben. Es sind dies beispielsweise Bohrmaschinen, Schleifmaschinen, Sägen und Maschinen zum Ein- und Ausdrehen von Schrauben 'oder Muttern, sowie sonstige Hilfsmittel, wie Beleuchtungen, Heizungen und Pumpen (z.B. auch für die Bereitstellung eines Arbeitsmittels, wie komprimierte Luft für pneumatisch angetriebene Werkzeuge oder eines unter Druck stehenden Hydrauliköls für hydraulisch betätigte Werkzeuge). Der nachfolgend benutzte Ausdruck "Werkzeug" umfaßt auch die vorgenannten Hilfsmittel. Als Stromquelle für derartige Werkzeuge wird meistens der Anschluß an ein Stromnetz benötigt. Dies gilt jedenfalls für leistungsstärkere Werkzeuge, für die ein Betreiben mittels eines Akkus nicht ausreicht. Häufig ist ein Betreiben solcher Werkzeuge nur vorübergehend nötig, so daß hierfür eine fest installierte Stromzuleitung nicht sinnvoll ist.

Da sich die entsprechende Anschlußstelle des Stromnetzes oft nicht in unmittelbarer Nähe des Orts befindet, an dem das Werkzeug betrieben werden soll, reicht die Länge des an dem Werkzeug angebrachten Anschlußkabels häufig nicht aus. Deshalb muß dieses Kabel durch ein Verlängerungskabel ergänzt werden. Somit ist es in vielen Fällen erforderlich, für das Werkzeug ständig das Verlängerungskabel zur Verfügung zu haben. Dieses muß dann auch immer zusammen mit dem Werkzeug transportiert werden und darf nicht verlorengehen.

Es ist auch bekannt, Werkzeuge der genannten Art in speziell dafür vorgesehenen Werkzeugkoffern aufzubewahren und zu transportieren. Verlängerungskabel hierfür finden in solchen Werkzeugkoffern normalerweise keinen ausreichenden Platz.

In der DE-U-8227725 ist ein aufklappbarer Werkzeugkoffer zur Aufnahme einer Handbohrmaschine und ihres Zubehörs beschrieben. Der Werkzeugkoffer enthält auch eine unverrückbar befestigte und herausnehmbare Kabelrolle für den elektrischen Anschluß der Bohrmaschine. Das Kabelende der Kabelrolle, das mit einem Elektrostecker versehen ist, ist durch eine Seitenwand des Werkzeugkoffers hindurchgeführt. Das andere Kabelende ist aus dem Werkzeugkoffer herausziehbar, wenn sein Deckel geöffnet ist.

Dieser Stand der Technik macht es zwar überflüssig, ein Verlängerungskabel für die Bohrmaschine gesondert zu beschaffen und jeweils gesondert an den Einsatzort der Bohrmaschine zu transportieren. Der Gebrauch der Kabelrolle ist aber nur möglich, wenn der Kofferdeckel geöffnet ist. Dies ist jedoch bei einem Werkzeugkoffer ungünstig, der einerseits außer der Bohrmaschine (oder einem anderen elektrisch betriebenen Werkzeug) noch andere wertvolle Geräte enthält, wie eine Bohrstaubabsaugvorrichtung, Bohrerkassetten, Bohrer für verschiedene Materialien, sowie Schneid-, Schleif- und Poliereinsätze, und andererseits von professionellen Handwerkern häufig auf externen Baustellen und Montageorten benutzt werden muß. Da zu solchen Orten sehr verschiedene Personen zutritt haben, läßt sich erfahrungsgemäß nicht verhindern, daß dort immer wieder Werkzeug entwendet wird, das täglich stundenlang griffbereit liegt, zum Beispiel in einem geöffneten Werkzeugkoffer.

Hinzu kommt, daß naturgemäß in einen solchen Werkzeugkoffer, dessen Deckel geöffnet ist, insbesondere auf einer Baustelle, erhebliche Mengen Staub und sonstiger Schmutz eindrigen können, die selbstverständlich unerwünscht sind. Auch besteht auf einer Baustelle, wo ja häufig mit Wasser hantiert wird, stets das Risiko, daß Feuchtigkeit oder Wasser in den geöffneten Werkzeugkoffer gelangen. Dies führt bei einem Werkzeugkoffer mit Elektrogeräten als Inhalt sogar zu einer wesentlichen Gefährdung der damit arbeitenden Personen.

Der Erfindung liegt deshalb die Aufgabe zugrunde, einen Werkzeugkoffer, der auch in Form einer Werkzeugkiste ausgebildet sein kann, anzugeben, der für ein darin aufbewahrtes oder auch sonstiges Elektrowerkzeug ein Verlängerungskabel in Form einer Kabelrolle enthält, die auch bei geschlossenem oder sogar abgesperrtem Kofferdeckel benutzbar ist und dann gleichzeitig sowohl ein unerwünschtes Einsehen in den Werkzeugkoffer oder gar einen unerlaubten Zugriff auf den Kofferinhalt als auch ein Eindringen von Staub, Schmutz, Feuchtigkeit und Wasser in den Werkzeugkoffer verhindert.

Diese Aufgabe löst die Erfindung durch einen Werkzeugkoffer mit
a) einem im Innenraum des Werkzeugkoffers angeordneten Elektrokabel, das auf mindestens einer in dem Werkzeugkoffer drehbar befestigten Kabelrolle aufgewickelt ist, die eine Kabelaufwickelvorrichtung aufweist, und
b) einer in einer Wand des Werkzeugkoffers vorgesehenen ersten Kabeldurchführungsöffnung, durch die ein erstes Anschlußende des Elektrokabels mit einem Elektrostecker vom Innenraum des Werkzeugkoffers nach außen hindurchgeführt ist.

Der erfindungsgemäße Werkzeugkoffer ist gekennzeichnet durch

c) eine in der Wand des Werkzeugkoffers vorgesehene zweite Kabeldurchführungsöffnung, durch die ein zweites Anschlußende des Elektrokabels mit einer Elektrokupplung vom Innenraum des Werkzeugkoffers nach außen hindurchgeführt ist.

Das erfindungsgemäß eingesetzte Elektrokabel besteht in bekannter Weise im wesentlichen aus einem ersten Kabelabschnitt mit einem ersten Anschlußende, an dem der Elektrostecker angeordnet ist, und aus einem zweiten Kabelabschnitt mit einem zweiten Anschlußende, an dem die Elektrokupplung vorgesehen ist. Beide Kabelabschnitte können sehr unterschiédlich lang sein.

Der erfindungsgemäße Werkzeugkoffer ist auch mit einer Kabelaufwickelvorrichtung ausgerüstet. Bei dieser kann es sich beispielsweise um eine Handhabe oder eine entsprechende Ausnehmung am Umfang der Kabelrolle handeln, mit deren Hilfe die Kabelrolle von Hand gedreht werden kann. Alternativ kann die Kabelrolle auch einen Federmechanismus enthalten, bei dem das Abwickeln des Kabels unter Zug entgegen der Federkraft unter Mitwirkung einer an sich bekannten Verriegelung beim Erreichen der gewünschten Kabellänge und das Aufwickeln des Kabels durch die Federkraft allein erfolgt.

Gemäß einer besonderen Ausführungsform ist die Kabelaufwickelvorrichtung mit einem einzigen Aufwickelmechanismus für das gleichzeitige Ab- und Aufwickeln des Kabelabschnitts mit dem Elektrostecker und des Kabelabschnitts mit der Elektrokupplung ausgebildet.

Gemäß einer weiteren Ausführungsform ist für den Kabelabschnitt mit dem Elektrostecker eine erste Kabelrolle mit zugehöriger erster Kabelaufwickelvorrichtung und für den Kabelabschnitt mit der Elektrokupplung eine zweite Kabelrolle mit zugehöriger zweiter Kabelaufwickelvorrichtung ausgebildet. In diesem Fall können beide Kabelrollen in einer Hälfte des Werkzeugkoffers (entweder in dem in der nachfolgenden Zeichnungsbeschreibung genannten Aufnahmeteil oder in dem dort genannten Deckelteil) oder die erste Kabelrolle im Aufnahmeteil und die zweite Kabelrolle im Deckelteil des Werkzeugkoffers oder umgekehrt angeordnet sein. In jedem Fall ist das Elektrokabel auf der ersten Kabelrolle mit dem Elektrokabel auf der zweiten Kabelrolle elektrisch verbunden.

Vorzugsweise ist die Kabelrolle oder sind die Kabelrollen, gegebenenfalls zusammen mit der jeweils zugehörigen Kabelaufwickelvorrichtung, in dem Werkzeugkoffer lösbar befestigt (z.B. mittels einer Flügelmutter oder -schraube oder einer Schnappverriegelung zwischen der Kabelrolle und ihrer Drehachse), und die erste und die zweite Kabeldurchführungsöffnung sind jeweils in Form eines bis an den freien Rand der jeweiligen Seitenwand des Werkzeugkoffers reichenden Schlitzes ausgebildet, über den das Elektrokabel senkrecht zu seiner Längsrichtung herausziehbar und wieder einschiebbar ist. Damit bietet der Werkzeugkoffer die Möglichkeit, bei Bedarf die Kabelrolle oder die Kabelrollen mit dem gesamten Elektrokabel sowie dem Elektrostecker und der Elektrokupplung aus dem Werkzeugkoffer zu entnehmen und nach Gebrauch dort wieder einzusetzen. So ist das Elektrokabel noch vielseitiger verwendbar. Wenn die Kabelrolle oder die Kabelrollen in dem Werkzeugkoffer befestigt sind, steht das Elektrokabel in der vorgenannten Weise immer dort zur Verfügung, wo sich der Werkzeugkoffer mit dem darin aufbewahrten Werkzeug befindet. Sind die Kabelrolle oder die Kabelrollen aus dem Werkzeugkoffer herausgelöst, kann die jeweilige Kabelrolle wie eine übliche Kabelrolle benutzt werden. Eine solche Anwendung kann im Einzelfall sehr nützlich sein, beispielsweise dann, wenn wegen sehr beschränkter Platzverhältnisse das Elektrokabel ohne den Werkzeugkoffer benutzt werden soll.

Es hat sich auch als günstig erwiesen, wenn derjenige Teil des Innenraums des Werkzeugkoffers, in dem mindestens eine Kabelrolle angeordnet ist, durch einen entfernbaren Zwischenboden vom restlichen Teil des Innenraums des Werkzeugkoffers abgeteilt ist. Der Zwischenboden kann auch die Funktion eines gesonderten Gehäuses für die jeweilige Kabelrolle übernehmen, so daß dieses Gehäuse als solches dann entfallen kann. Der Zwischenboden kann aber auch zusätzlich zu einem solchen gesonderten Gehäuse verwendet werden und beispielsweise als Träger für bestimmte Kleinhandwerkzeuge oder Kleinteile dienen. Ferner kann sich der Zwischenboden auch nur über einen Teil der Grundfläche des Innenraums des Werkzeugkoffers erstrecken.

Um zu verhindern, daß bei aufgewickeltem Elektrokabel dessen Enden mit dem Elektrostecker und der Elektrokupplung an der Kofferaußenseite in störender Weise lose herabhängen oder der Stecker und die Kupplung über den Kofferumfang vorstehen, sind an der Kofferaußenseite vorzugsweise Befestigungsmittel für die Kabelanschlußenden vorgesehen. Dabei können zusätzlich Vertiefungen oder Ausnehmungen in der Kofferwand ausgebildet sein, in die der Stecker und die Kupplung bündig mit dem Kofferumfang eingelegt werden können und wo sie dann durch eine Klemmhalterung fixiert werden.

Beim erfindungsgemäßen Werkzeugkoffer kann die Elektrokupplung auch in Form einer Mehrfachkupplung für den gleichzeitigen Anschluß mehrerer elektrisch zu betreibender Werkzeuge ausgebildet sein.

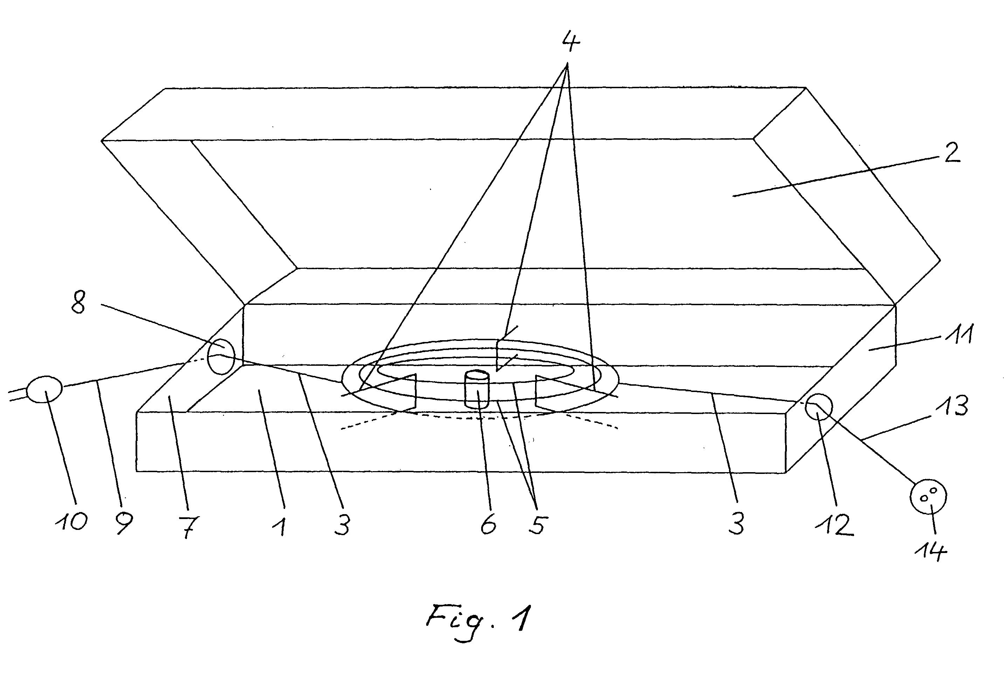

Die Erfindung wird nachfolgend anhand eines in der beigefügten Zeichnung schematisch dargestellten Ausführungsbeispiels erläutert.

In der Zeichnungsfigur ist ein erfindungsgemäßer Werkzeugkoffer in geöffneter Stellung perspektivisch dargestellt. Zur leichteren Übersicht werden nur die wichtigsten Teile des Erfindungsgegenstands, nämlich der eigentliche Koffer, das darin angeordnete Elektrokabel 3 auf einer Kabelrolle 4 und die beiden aus dem Werkzeugkoffer herausgeführten Kabelanschlußenden in vereinfachter Darstellung gezeigt.

Gemäß der Figur weist der Werkzeugkoffer einen Aufnahmeteil 1 und einen Deckelteil 2 auf. Der Aufnahmeteil 1 ist für die Aufnahme des Elektrokabels 3 und weiterer (in der Zeichnung nicht dargestellter) Gegenstände, wie eines elektrisch zu betreibenden Werkzeugs sowie gegebenenfalls weiterer Kleinhandwerkzeuge und irgendwelcher Kleinteile, vorgesehen. Das Elektrokabel 3 ist in dem Aufnahmeteil 1 auf einer Kabelrolle 4 aufgewickelt, deren Windungen 5 nur schematisch durch Ellipsen dargestellt sind. Die Kabelrolle 4 ist in dem Aufnahmeteil 1 drehbar und davon lösbar befestigt. Die Befestigung der Kabelrolle 4 kann beispielsweise durch eine (in der Zeichnung nicht dargestellte) Verschraubung mit dem Aufnahmeteil 1, wobei eine von Hand lösbare Flügelmutter oder schraube verwendet wird, erreicht werden. Alternativ ist auch eine übliche Schnappverriegelung zwischen der Kabelrolle 4 und ihrer an dem Aufnahmeteil 1 befestigten Drehachse möglich.

Ferner ist die Kabelrolle 4 mit einer Kabelaufwickelvorrichtung 6 ausgerüstet. Diese enthält beispielsweise eine (in der Zeichnung nicht dargestellte) Spiralfeder, durch deren Wirkung das Elektrokabel 3 stets in Aufwickelrichtung der Kabelrolle 4 gezogen wird. Wenn das Elektrokabel 3 auf die gewünschte Länge abgewickelt ist, verhindert ein an sich bekannter Verriegelungsmechanismus ein selbsttätiges Wiederaufwickeln des Elektrokabels 3.

In einer ersten Seitenwand 7 des Aufnahmeteils 1 des Werkzeugkoffers ist eine erste Kabeldurchführungsöffnung 8 vorgesehen, durch die ein erstes Anschlußende 9 des Elektrokabels 3 mit einem Elektrostecker 10 zur Kofferaußenseite hindurchgeführt ist.

An einer zweiten Seitenwand 11 des Aufnahmeteils 1, die der ersten Seitenwand 7 gegenüberliegt, ist eine zweite Kabeldurchführungsöffnung 12 vorhanden, durch die ein zweites Anschlußende 13 des Elektrokabels 3 mit einer Elektrokupplung 14 zur Kofferaußenseite hindurchgeführt ist. Alternativ können sich die beiden Kabeldurchführungsöffnungen 8, 12 auch in benachbarten Seitenwänden oder in ein und derselben Wand des Werkzeugkoffers befinden.

Bei der in der Zeichnung dargestellten Ausführungsform ist die Kabelaufwickelvorrichtung 6 nur für das Ab- und Aufwickeln des Kabelabschnitts mit der Elektrokupplung 14 ausgebildet.

Für die Benutzung des erfindungsgemäßen Werkzeugkoffers, der ein elektrisch zu betreibendes Werkzeug enthält, wird er nach seinem Transport an den Einsatzort des Werkzeugs gebracht, wobei ein gesonderter Transport eines Verlängerungskabels überflüssig ist. An dem Ort wird das Werkzeug dem Werkzeugkoffer entnommen. Der Elektrostecker 10 am ersten Anschlußende 9 des Elektrokabels 3 wird mit der Anschlußstelle des vorhandenen Stromnetzes verbunden. Das zweite Anschlußende 13 mit der Elektrokupplung 14 wird bis zur gewünschten Kabellänge aus der zweiten Kabeldurchführungsöffnung 12 des Aufnahmeteils 1 herausgezogen. Dann wird das Anschlußkabel des elektrisch zu betreibenden Werkzeugs mit der Elektrokupplung 14 verbunden, wodurch das Werkzeug funktionsbereit ist. Nach Beendigung der Arbeit mit dem Werkzeug werden die Anschlußenden 9, 13 des Elektrokabels 3 vom Stromnetz und von dem Werkzeug getrennt. Der ausgezogene Kabelabschnitt mit der Elektrokupplung 14 wird wieder auf die Kabelrolle 4 aufgewickelt. Dies geschieht in Abhängigkeit von der Art der Kabelaufwickelvorrichtung 6 entweder durch entsprechendes Drehen der Kabelrolle 4 von Hand oder mit Hilfe der Rückstellkraft einer entsprechenden Feder.

## Patentansprüche

1. Werkzeugkoffer mit
a) einem im Innenraum des Werkzeugkoffers angeordneten Elektrokabel (3), das auf mindestens einer in dem Werkzeugkoffer drehbar befestigten Kabelrolle (4) aufgewickelt ist, die eine Kabelaufwickelvorrichtung (6) aufweist, und
b) einer in einer Wand (7) des Werkzeugkoffers vorgesehenen ersten Kabeldurchführungsöffnung (8), durch die ein erstes Anschlußende (9) des Elektrokabels (3) mit einem Elektrostecker (10) vom Innenraum des Werkzeugkoffers nach außen hindurchgeführt ist,
**gekennzeichnet durch**
c) eine in der Wand (11) des Werkzeugkoffers vorgesehene zweite Kabeldurchführungsöffnung (12), **durch** die ein zweites Anschlußende (13) des Elektrokabels (3) mit einer Elektrokupplung (14) vom Innenraum des Werkzeugkoffers nach außen hindurchgeführt ist.

2. Werkzeugkoffer nach Anspruch 1, **dadurch gekennzeichnet, daß** die Kabelaufwickelvorrichtung (6) für das gleichzeitige Ab- und Aufwickeln sowohl des Kabelabschnitts mit dem Elektrostecker (10) als auch des Kabelabschnitts mit der Elektrokupplung (14) ausgebildet ist.

3. Werkzeugkoffer nach Anspruch 1 oder 2, **dadurch gekennzeichnet, daß** die Kabelrolle (4) oder die Kabelrollen in dem Werkzeugkoffer lösbar befestigt ist/sind und, daß die erste und die zweite Kabeldurchführungsöffnung (8, 12) jeweils in Form eines bis an den freien Rand der jeweiligen Wand (7, 11) des Werkzeugkoffers reichenden Schlitzes ausgebildet sind, über den das Elektrokabel (3) senkrecht zu seiner Längsrichtung herausziehbar und wieder einschiebbar ist.

4. Werkzeugkoffer nach einem der Ansprüche 1 bis 3, **dadurch gekennzeichnet, daß** derjenige Teil des Innenraums des Werkzeugkoffers, in dem die Kabelrolle (4) angeordnet ist, durch einen entfernbaren Zwischenboden vom restlichen Teil des Innenraums des Werkzeugkoffers abgeteilt ist.

5. Werkzeugkoffer nach einem der Ansprüche 1 bis 4, **dadurch gekennzeichnet, daß** an seiner Außenseite Befestigungsmittel für die Anschlußenden (9, 13) des Elektrokabels (3) vorgesehen sind.

## Claims

1. Toolbox having
a) an electrical cable (3) arranged in the interior of the toolbox, which is wound on at least one cable reel (4) rotatably attached in the toolbox, which has a cable wind-up arrangement (6), and
b) a first cable pass-through opening (8) provided in one wall (7) of the toolbox, through which a first connection end (9) of the electrical cable (3) with an electrical plug (10) is passed through from the interior of the toolbox to the outside,
**characterized by**
c) a second cable pass-through opening (12) provided in the wall (11) of the toolbox, through which a second connection end (13) of the electrical cable (3) with an electrical coupling (14) is passed through from the interior of the toolbox to the outside.

2. Toolbox according to claim 1, **characterized in that** the cable wind-up arrangement (6) is designed for the simultaneous unwinding and winding of both the cable section with the electrical plug (10) and the cable section with the electrical coupling (14).

3. Toolbox according to claim 1 or 2, **characterized in that** the cable reel (4) or the cable reels is/are releasably attached in the toolbox and that the first and the second cable pass-through openings (8, 12) are in each case designed in the form of a slot extending to the outside edge of the respective wall (7, 11) of the toolbox, through which the electrical cable (3) can be pulled out and pushed back in perpendicular to its longitudinal direction.

4. Toolbox according to one of claims 1 through 3, **characterized in that** the portion of the interior of the toolbox in which the cable reel (4) is arranged is isolated by a removable false bottom from the remaining portion of the interior of the toolbox.

5. Toolbox according to one of claims 1 through 4, **characterized in that** attachment means for the connection ends (9, 13) of the electrical cable (3) are provided on its outside.

## Revendications

1. Coffre à outils avec
a) un câble électrique (3) disposé à l'intérieur du coffre à outils, qui est enroulé sur au moins un rouleau pour câble (4) fixé de façon pivotante dans le coffre à outils, qui présente un dispositif d'enroulement de câble (6), et
b) une première ouverture de passage de câble (8) prévue dans une paroi (7) du coffre à outils, par laquelle est passée une première extrémité de raccordement (9) du câble électrique (3) avec une fiche électrique (10) de l'intérieur du coffre à outils vers l'extérieur,
**caractérisé en ce que**,
c) une deuxième ouverture de passage de câble (12) prévue dans la paroi (11) du coffre à outils, par laquelle est passée une deuxième extrémité de raccordement (13) du câble électrique (3) avec un dispositif d'accouplement électrique (14) de l'intérieur du coffre à outils vers l'extérieur.

2. Coffre à outils selon la revendication 1,
**caractérisé en ce que** le dispositif d'enroulement de câble (6) est conçu pour le déroulement et l'enroulement simultanés aussi bien de la partie de câble avec la fiche électrique (10) que de la partie de câble avec le dispositif d'accouplement électrique (14).

3. Coffre à outils selon la revendication 1 ou 2,
**caractérisé en ce que** le rouleau de câble (4) ou les rouleaux de câble est/sont fixé(s) de façon amovible dans le coffre à outils et **en ce que** les première et deuxième ouvertures de passage de câble (8, 12) sont conçues respectivement sous la forme d'une fente allant jusqu'au bord libre de la paroi (7, 11) respective du coffre à outils, par laquelle le câble électrique (3) peut être sorti et réinséré perpendiculairement à son sens longitudinal.

4. Coffre à outils selon l'une quelconque des revendications 1 à 3, **caractérisé en ce que** la partie respective de l'espace intérieur du coffre à outils, dans lequel est disposé le rouleau de câble (4), est séparée par un fond intermédiaire démontable de la partie restante de l'intérieur du coffre à outils.

5. Coffre à outils selon l'une quelconque des revendications 1 à 4, **caractérisé en ce que** des moyens de fixation sont prévus sur son côté extérieur pour les extrémités de raccordement (9, 13) du câble électrique (3).
